# EUROPEAN PATENT APPLICATION

(11) **EP 1 507 328 A2**
(43) Date of publication of application: **16.02.2005**
(21) Application number: 04254676.2
(22) Date of filing: 04.08.2004
(51) Int. Cl.: H02K 7/00, H02K 7/08

(54) **Lubrication system for a rotating machine**

(30) Priority: 12.08.2003 GB 0318922
(71) Applicant: Goodrich Control Systems Ltd, Solihull, West Midlands B90 4LA (GB)
(72) Inventor: Batchelor, Stephen, Berkhamsted Hertfordshire, HP4 2BG (GB); Royle, Michael, Sawbridgeworth Hertfordshire, CM21 9HA (GB)
(74) Representative: Beck, Simon Antony

(57) **Abstract**

A lubricant arrangement for lubrication rotor bearings is provided. A hollow rotor (4) has an oil delivery pipe (30) extending along it. The pipe (30) has apertures (36) formed in it for the delivery of lubricant towards the interior of the rotor. A lubricant collection means (70) is provided to collect lubricant from the operative (36) and to direct it via ducts (90, 50, 52) towards the bearings (12).

## Description

The present invention relates to a lubrication system for a rotating machine. The invention has particular utility in relation to aeronautical generators.

A rotating machine comprises a rotor mounted for rotation with respect to a stator. The rotor is supported on rotor bearings. Often there is a need to lubricate the rotor bearings. This can be achieved by providing a rotor shaft which is hollow and drillings are provided through the rotor shaft in the vicinity of the races for the bearings in order that oil can be passed from the inside of the rotor shaft through the drilling into the bearing race in order to provide a lubricating and cooling flow of oil. This approach can work well for rotors which are driven at a fixed speed. However it does not work so well where the rotor can be driven over a wide range of speeds. This is because, in effect, the interior of the rotor shaft has access to a relatively large supply of oil. As the speed of rotation of the shaft increases, the forces, typically centrifugal force, act to increase the pressure driving the oil through the drillings, and hence the oil flow rate through the drillings increases with increasing rotor speed. Too much oil in the bearings has a disadvantageous effect on the operation and lifetime of the bearings. Therefore the drillings which allow the oil to reach the bearings have to be sized in order to ensure that at maximum rotor speed they will not provide an excess flow of oil to the bearings. However, this has the consequence that at lower rotor speeds the volume of oil provided from the interior of the rotor shafts to the bearings is less than that which would be desired for ideal bearing lubrication.

It is desirable that in high reliability applications, such as aeronautical applications, the maximum service life possible should be obtained.

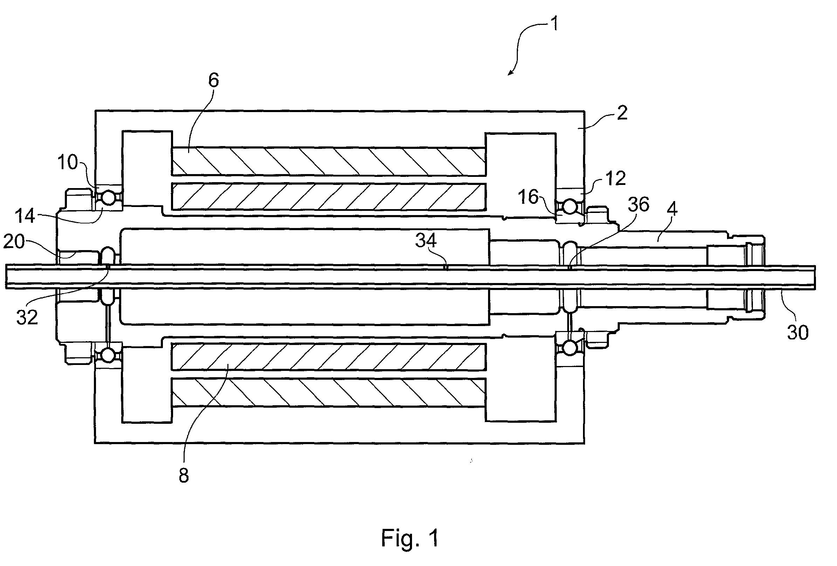

GB 1000212 discloses a bearing assembly for a gas turbine engine in which lubricant from a delivery pipe 21 is supplied via a drilling 23 in an element, the construction of which is not described, to a pocket 25 which is designed to act as a reservoir of lubricant. This specification is silent about whether the delivery pipe 21 is non-rotating or whether it rotates with the shaft 11. Furthermore the element shown in Figure 1 to define the drilling 23 appears to be in touching and fluid sealed engagement with the delivery pipe 21 and the shaft 11.

JP 4228922 discloses a bearing arrangement where oil is supplied to bearings 5 and 6 via drillings 11 in a rotating shaft. This arrangement seems to suffer the disadvantage that the flow of oil in the passages 11 will increase due to centrifugal force. This is the problem that the present invention overcomes.

JP 8247154 discloses a lubricating system where a central channel is used to convey oil to a region where it can flow towards bearings via drillings if in a shaft. It is unclear whether the separator cylinder rotates with the shaft 1, but this seems likely as seals are shown in Figure 1 as being positioned between the separator cylinder and the shaft.

According to a first aspect of the present invention there is provided a rotating machine comprising a rotor rotatably mounted on rotor bearings wherein the rotor includes a hollow rotor shaft open at a first end for admitting a lubricant delivery pipe having at least one orifice formed therein for delivering lubricant from the lubricant delivery pipe, and lubricant collection means positioned within the rotor shaft for collecting lubricant from the at least one orifice and for delivering the lubricant to the rotor bearings, characterised in that the lubricant collection means is arranged to spill excess oil flow away from the bearing.

By delivering lubricant from a delivery pipe positioned within the rotor shaft the flow of oil to lubricate the bearings can be better controlled as the volume of oil available to exit the drillings and lubricate the bearing can be restricted to a level less than that which would cause damage to the bearings.

Advantageously the lubricant pressure within the delivery pipe is regulated and/or the pipe is non rotating. These features cause the physical processes acting to drive the lubricant through the at least one orifice to remain substantially controlled and independent of (or only weakly dependent on) rotor speed. Thus the rate of lubricant delivered into the interior of the rotor for use in lubricating the rotor bearings is dependent on the oil pressure within the delivery pipe and substantially invariant, of the rotor speed.

Advantageously the rotating machine is an aircraft generator which is intended to be directly driven by the low pressure shaft of an aeronautical gas turbine. Such a generator is typically mounted axially to the aircraft engine and may be required to accommodate the passage of a static, that is non-rotating, centrally located oil tube. The static oil tube provides a lubricating supply of oil to the engine low pressure shaft bearings. The oil flowing in the static tube is determined by the engine oil system pump and pressure regulator.

Thus the static oil tube used to deliver lubricant to the low pressure shaft bearings can also be used to deliver lubricant to the generator. This component therefore functions as the delivery pipe and has at least one orifice formed therein in order to provide lubricant to the rotor.

Advantageously the lubricant collection means is axially aligned with the at least one orifice in the delivery pipe such that oil exiting from the orifice is collected by the lubricant collection means. Advantageously the lubricant collection means is in the form of a groove or channel. The walls of the groove or channel may be formed by provision of additional walls standing proud from the interior surface of the rotor, or alternatively the groove or channel itself may be cut into the interior surface of the rotor. The rotating motion of the rotor when in use ensures that the oil is held within the channel by virtue of centrifugal forces. The groove or channel can also act as a weir such that any excess oil provided by the at least one orifice which is not ducted towards the bearings, for example when the rotor is rotating at relatively slow speeds, can flow over the top of the walls and exit from the groove towards a drain for the oil.

Advantageously drillings are provided from the groove to one of the bearing races of the rotor bearings such that cooling and lubricating oil can be delivered to the bearings. In some generator configurations, it is also desirable to have an axial flow of oil along the internal surface of the rotor in order to provide cooling to the rotor laminations and/or to the electrical components mounted on the rotor. In such circumstances the lubricant collection means should not significantly impede the axial flow of oil and should also ensure that the axial flow cannot become mixed with the bearing lubricant flow and thereby contribute to it.

Advantageously axial flow channels are provided from one side of the lubricant collection means to the other side thereof with those channels being disposed radially outward of the recess or channel used to capture the lubricating oil delivered from the at least one orifice in the delivery pipe. Preferably the lubricant collection means is provided as a component having a body in which a first surface faces towards the axis of rotation of the rotor shaft, and the first surface is bounded by walls extending radially inward of the first surface to define a collection region, and further having channels extending between opposed ends of the lubricant collection means so as to permit the axial flow of fluid along the interior of the rotor shaft, and wherein the collection region is in fluid flow communication with a delivery duct formed in the rotor shaft to deliver lubricant to the rotor bearings.

Advantageously the body has spaced apart supports extending therefrom for engaging with an internal surface of the rotor and wherein the spaces between the supports act as the axial flow channels. Thus the oil collection means can effectively be regarded as a multi-toothed oil gathering component which allows the relatively free circulation of cooling oil along the rotor shaft through its inter-tooth regions. The inwardly facing surface of the component is preferably annular and acts as a weir to collect the oil that exits from the associated orifice formed in the delivery pipe such that the oil is not lost to the inside of the rotor shaft. Furthermore, if the width of the collector is sufficiently large and the passages through it to communicate oil to the drillings through the rotor shaft are also sufficiently large, then the collector compensates for tolerances in the axial positioning of the holes in the static tube and the bearing lubrication drillings.

Preferably the rate of supply of oil to the bearings is metered by the size of the orifice in the static oil tube. Therefore the rate of supply would be a simple function of the oil pressure, the size of the orifice, which typically would be a hole, and the number of holes provided. The drillings provided between the inside of the rotor shaft and the bearings are then sized such that they are sufficiently large that they can pass the fixed flow rate to the bearings at all rotor speeds. However, the inventor has found that it is frequently desirable to make the size of the orifice in the delivery pipe larger than that desired for the correct flow of oil in order to ensure that the orifice cannot become blocked by debris which may be found in the oil. In order to deal with the increased flow of oil into the lubricant collection means, additional exits are provided from the collection means, which do not communicate oil to the bearing but instead allow the oil to be drained away.

According to a second aspect of the present invention there is provided a rotor shaft, wherein the internal surface of the shaft is profiled to define a lubricant collecting channel in communication with a passage for delivering lubricant to a space where, in use, rotor bearings are provided.

According to a third aspect of the present invention, there is provided an oil collector for use within a hollow rotor shaft, comprising a body having a first surface defining a first aperture to permit the passage of a delivery pipe through the body, and wherein a recess is formed in the first surface to collect lubricant from an orifice in the delivery pipe, and at least one duct is formed in the body to deliver lubricant from the recess to a duct formed in the rotor shaft.

The present invention will further be described, by way of example, with reference to the accompanying drawings, in which:
Figure 1 is a cross section through a generator with rotor shaft shown in detail and constituting an embodiment of the present invention;
Figure 2 shows the bearings and lubrication arrangement in greater detail;
Figure 3 is a cross sectional view of an alternative lubrication arrangement constituting a second embodiment of the present invention; and
Figure 4 shows the external profile of the lubricant collection element in greater detail.

Figure 1 schematically illustrates a generator 1 comprising a stator 2 and a rotor 4. The generator is advantageously a switched reluctance generator. The stator 2 carries stator coils 6 which magnetically interact with the rotor in order to generate electricity when the rotor 4 is turned. However, generators are also known where the rotor carries rotor coils. The present invention is also applicable to such generators. The rotor is supported within the generator 1 by bearings 10 and 12 which typically engage with load supporting regions of a casing (or stator) of the generator. Inner bearing races 14 and 16 engage with cooperating profiles on an outer surface of the rotor 4 order to ensure that the rotor 4 is held against axial translation by the action of the bearings whilst still being allowed to rotate freely.

The rotor may be driven via an internal spline 20 disposed within the rotor shaft. Alternatively the rotor may be driven by gears disposed on the rotor shaft.

In an embodiment of the present invention the generator has a passage extending through the rotor such that a non-rotating oil delivery pipe 30 can extend through the rotor. The oil delivery pipe 30 is in fluid flow communication with a pressure regulated supply of lubricant. Within an aeronautical application, the delivery pipe 30 delivers the lubricant to bearings for the low speed spool of a gas turbine engine (not shown).

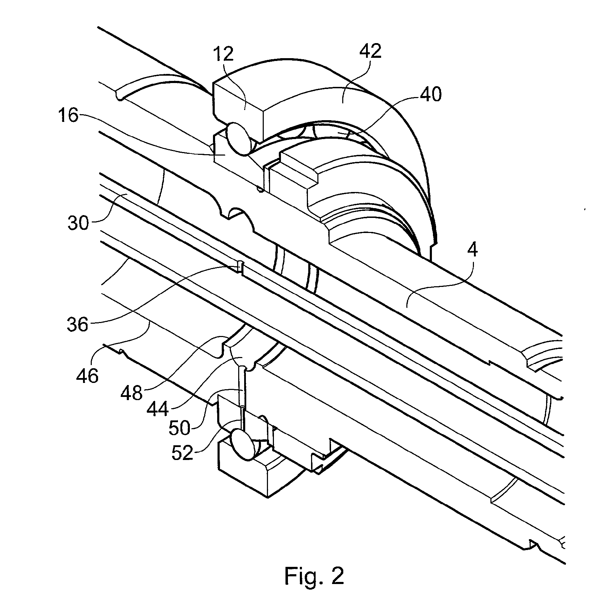

Several apertures 32, 34 and 36 are provided in the lubricant delivery pipe 30 in order to extract lubricant from the interior of the pipe. Given that the pressure within the pipe is regulated, then the flow rate through the apertures can be accurately selected by selecting an appropriate sized aperture. The apertures 32 and 36 are aligned with the bearings 10 and 12 in order to provide lubrication for the bearings. Figure 2 shows the bearing 12 in greater detail. As shown in Figure 2, the bearing 12 comprises a plurality of spherical ball bearings 40 located between an inner bearing race 16 and an outer bearing race 42. The interior of the rotor 4 is machined so as to define an annular recess 44 which is axially aligned with the orifice 36. In the example shown in Figure 2 the internal diameter of the rotor increases in a region 46 adjacent the recess 44 such that the recess 44 and the region 46 are effectively separated by a wall 48 which forms a weir over which excess oil can flow and be drained away in the event that the flow rate through the orifice 36 exceeds the maximum allowed rate of flow to the bearing 12.

A drilling 50 is provided in the rotor 4 which extends from the recess 44 to communicate with a further drilling 52 formed in the inner bearing race 16 to deliver lubricant to the bearing 12. The drilling 50 enters the recess 44 at the midpoint thereof, which corresponds to the largest diameter portion of the recess.

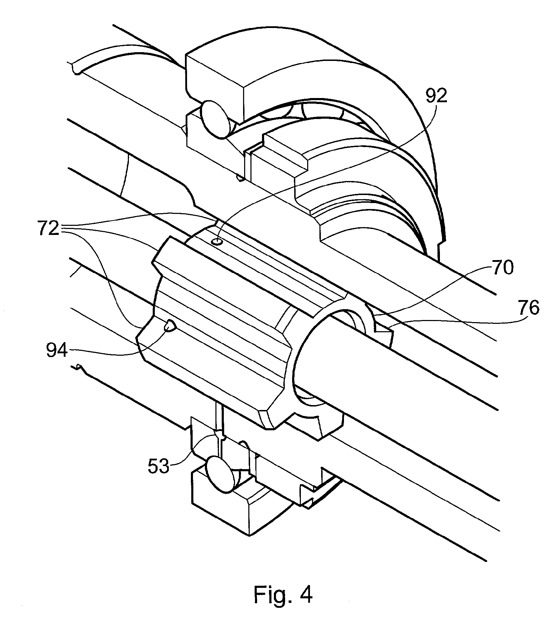

In use oil is provided by an oil delivery system into the interior of the delivery pipe 30 under pressure. The oil passes through the orifice 36 and is sprayed into the recess 44. The rotor 4 is, in use, rotating rapidly and hence the oil reaching the recess 44 starts to rotate with the rotor. The rotary motion creates a centrifugal force which causes the oil to be held within the recess 44 and to be forced towards the centre most section of the recess 44 where its radius is greatest. From here the oil flows through the drilling 50 towards the further drilling 52. The drilling 50 has a greater diameter than the drilling 52 in order to accommodate misalignment between the inner bearing race 16 and the rotor 4. Alternatively an annulus or groove 53 may be provided on the radially innermost surface of the bearing race to accommodate both axial and angular misalignment, as shown in Figure 4.

At high rates of rotation oil is rapidly swept through the drilling 50. However the rate of flow of oil to the bearings is controlled by the size of the orifice 36 and the provision of any further drilling(s) extending through the wall 48 to divert a proportion of the oil into the region 46 so it can drain. However at low rotational rates the flow of oil through the drilling 50 is much reduced (because centrifugal force on the oil is reduced) whereas the flow of oil through the orifice 36 remains controlled. If the rate at which the oil flows from the recess 44 is less than the rate at which oil enters it via the orifice 36, then the excess oil can spill over the wall 48 into the region 46 and be drained away. It thus becomes possible to ensure that the bearings are adequately lubricated at low rational rates but do not become over lubricated at high rotational rates.

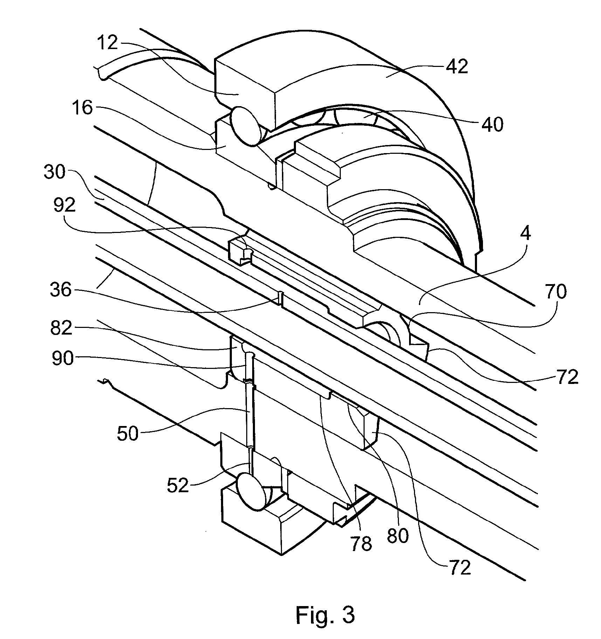

Figures 3 and 4 show a modified lubricant collection means. Other parts within Figures 3 and 4 which are identical to those shown in Figures 1 and 2 are given like reference numerals.

The lubricant collection component 70 comprises a cylindrical body element having teeth 72 extending radially outwards therefrom. The teeth 72 engage with the inner surface of the rotor 4 and define axially extending channels 76 therebetween. The channels 76 allow flow of oil along the interior of the rotor from one side to the other side of the component 70. The flow of oil may result from other orifices in the delivery pipe or by the admission of oil through the end of the rotor shaft. As shown in Figure 3, the cylindrical body 70 has a recess 78 bounded by end portions 80 and 82. The recess 78 opposes the orifice 36 and collects oil spraying therefrom. The regions 80 and 82 define end walls to prevent the oil being lost over the edges of the component 70. A clearance is provided within the end sections 80 and 82 and the pipe 30 in order to ensure that there is no mechanical interference between these components.

A drilling 90 (which acts as a delivery passage) extends through one of the teeth 72 such that, when the component 70 is correctly positioned within the rotor 4 the drilling 90 aligns with the drilling 52. Thus oil exiting from the orifice 36 can be delivered to the bearing 12 via the recess 78, the drilling 90, the drilling 50 and the further drilling 52. However where the amount of oil exiting from the orifice 36 is in excess of that required by the bearing 12, then further drillings 92 and 94 extending between the recess 78 and the inter-tooth regions 70 can be provided such that the excess oil can be spilled to the interior of the rotor 4 from where it is drained. In use there is no risk of the axial flow within the rotor flowing backwards through the drillings 92 and 94 because the rotation of the rotor sets up centrifugal forces which serve to prevent the backward flow.

It is thus possible to provide a generator where a flow of oil is tapped off a static delivery tube 30 running through the centre of the generator. The oil tapped therefrom is captured by oil collection devices from where the flow of collected oil can be divided such that a desired amount of oil is directed towards the bearings so as to lubricate them, and the remainder of the oil is spilled away into the interior of the rotor, from where it is drained away for use by an oil delivery system. The drain may be a passage extending from the interior surface of the rotor to an end thereof or to the exterior surface thereof. The provision of the star shaped or toothed component 70 still enables the axial flow of oil within the rotor for cooling purposes. Such an axial flow may be achieved by admitting oil into one end of the rotor, or alternatively by collecting oil from the orifice 34 shown in Figure 1. The interior surface of the rotor shaft may itself be profiled, for example with a helical thread in order to ensure that the cooling oil flows uniforrnally along the interior of the rotor thereby preventing heat build up within the rotor.

The oil pressure within the static delivery tube, 30, may be maintained substantially constant over all engine and generator speeds, thus ensuring that the flow through the orifices 32, 34, 36, remains substantially constant at all operating speeds.

Alternatively, the oil pressure within the static delivery tube, 30, may be arranged to increase, within predetermined limits, in dependence upon or as a function of the speed of the engine to which the generator is connected such that the flow of oil through the orifices 32, 34, 36, increases as the generator speed increases, thus making a greater oil flow available to the bearings, 10, 12, at higher rotor speeds. However, it is advantageous that the pressure does not increase as rapidly as the square of the engine speed (as is the case with centrifugal force) and most preferably the oil pressure is maintained within a range that does not vary by more than 2:1 or so.

## Claims

1. A rotating machine comprising a rotor (4) rotatably mounted on rotor bearings (12), wherein the rotor includes a hollow rotor shaft (4) open at a first end for admitting a delivery pipe (30) having at least one orifice (36) formed therein for delivering lubricant from the delivery pipe, and lubricant collection means (44; 70) positioned within the rotor shaft for collecting lubricant from the at least one orifice (36) and delivering the lubricant to the rotor bearings, **characterised in that** the lubricant collection means is arranged to spill excess oil flow away from the bearing.

2. A rotating machine as claimed in claim 1, in which the lubricant collection means comprises a recess (44) formed in the rotor shaft and having a first (50) conduit extending from the recess towards an associated rotor bearing.

3. A rotating machine as claimed in claim 2, in which the lubricant collection means further comprises a second conduit (46) extending from the recess (44) to deliver excess oil away from the associated rotor bearing.

4. A rotating machine as claimed in claim 2 or 3, in which the recess is a groove (44) formed in an inner surface of the rotor shaft.

5. A rotating machine as claimed in claim 2 or 3, in which the recess is delimited by first and second spaced apart walls.

6. A rotating machine as claimed in any one of the preceding claims, in which the lubricant collection means (70) further includes axial flow channels (76) extending between first and second sides of the lubricant collection means for permitting axial flow of a fluid along the interior of the rotor shaft.

7. A rotating machine as claimed in claim 1, in which the lubricant collection means comprises a collection device comprising a body (70) having a first surface facing towards the axis of rotation of the rotor shaft and co-operating with first and second spaced apart walls (80; 82) extending radially inward of the first surface to define a collection region, and further having channels extending (76) between opposed ends of the lubricant collection means so as to permit axial flow of fluid along the interior of the rotor shaft, and wherein the collection region is in fluid flow communication with delivery conducts formed in the rotor shaft to deliver lubricant to the rotor bearings.

8. A rotating machine as claimed in claim 7, in which delivery passages (90) formed in the collection device do not intersect with the channels.

9. A rotating machine as claimed in claim 7 or 8, in which the body has spaced apart supports (72) extending therefrom for engaging with an internal surface of the rotor and wherein the spaces between the supports act as the channels.

10. A rotating machine as claimed in claim 9, in which the delivery passage or passages (90) extends through at least one of the supports.

11. A rotating machine as claimed in any preceding claim, in which the rotor is supported by first and second bearings (12, 14) and collection means are provided for lubricating a respective one of the bearings.

12. A rotating machine as claimed in any one of the preceding claims, in which the rotating machine is a generator.

13. A rotating machine as claimed in any one of the preceding claims in which there is a gap between the delivery pipe and the collection means such that excess lubricant can flow through the gap.

14. A rotor shaft, wherein the rotor shaft is open at a first end to admit a delivery pipe and wherein at least one recess (44) is formed in an inner surface of the rotor shaft and the recess is in fluid flow communication with a duct (50) that extends towards the position where rotor shaft bearings will, in use, be provided so as to deliver lubricant to the bearings.

15. A rotor shaft as claimed in claim 14 further including a region separated from the recess (44) by an inwardly projecting feature (48) which, in use, forms a weir over which excess lubricant can spill from the recess (44) and be drained away.

16. An oil collector for use within a hollow rotor shaft, comprising a body (70) having a first surface defining a first aperture to permit the passage of a delivery pipe through the body, and wherein a recess is formed in the first surface to collect lubricant from an orifice in the delivery pipe, and at least one duct (90) is formed in the body to deliver lubricant from the recess to a duct formed in the rotor shaft.

17. An oil collector as claimed in claim 16, further comprising passages or channels (76) formed within the body for allowing flow of a liquid from a first end of the body to a second end of the body.
